Europäisches Patentamt

(19) European Patent Office

Office européen des brevets

(11) Numéro de publication: **0 089 348**
**B1**

(12) **FASCICULE DE BREVET EUROPEEN**

(45) Date de publication du fascicule du brevet:
16.07.86

(21) Numéro de dépôt: **82902734.1**

(22) Date de dépôt: **21.09.82**

(86) Numéro de dépôt international:
**PCT/FR 82/00153**

(87) Numéro de publication internationale:
**WO 83/01123** (31.03.83 Gazette 83/8)

(51) Int. Cl.⁴: **G 02 B 6/38**

(54) **CELLULE DE CENTRAGE POUR RACCORDEMENT DE FIBRES OPTIQUES.**

(30) Priorité: **23.09.81 FR 8117953**

(43) Date de publication de la demande:
**28.09.83 Bulletin 83/39**

(45) Mention de la délivrance du brevet:
**16.07.86 Bulletin 86/29**

(84) Etats contractants désignés:
**AT BE CH DE FR GB LI LU NL SE**

(56) Documents cités:
**WO - A - 81/03383**
**FR - A - 2 406 210**
**US - A - 4 088 386**
**US - A - 4 094 580**
**US - A - 4 161 347**
**US - A - 4 184 741**

**APPLIED OPTICS, vol. 15, no. 11, November 1976 (New York, US), F.L. Thiel et al.: "Optical waveguide connection", pages 2785-2791**

(73) Titulaire: **CLEMENT, Jean-Joseph, 3, Place Kennedy, F-92170 Vanves (FR)**
Titulaire: **LAFUENTE, Claude, Villa Salvatierra - San Bastian, F-06510 Carros (FR)**

(72) Inventeur: **CLEMENT, Jean-Joseph, 3, Place Kennedy, F-92170 Vanves (FR)**
Inventeur: **LAFUENTE, Claude, Villa Salvatierra - San Bastian, F-06510 Carros (FR)**

(74) Mandataire: **Pinguet, André, CAPRI 28 bis, avenue Mozart, F-75016 Paris (FR)**

# Description

La présente invention a pour objet une cellule de centrage pour raccordement de fibres optiques, permettant notamment de raccorder entre elles deux fibres optiques, ou de raccorder une fibre optique à un émetteur ou un récepteur de signaux lumineux. L'invention a également pour objet un procédé et un dispositif pour la réalisation d'une telle cellule. Il s'agit essentiellement de maintenir l'extrémité d'une fibre optique dans une position définie axialement et longitudinalement afin de permettre le positionnement de deux extrémités de fibres bout à bout pour faire passer un signal dans les meilleures conditions. L'invention s'applique notamment à des fibres optiques de faible dimension, par exemple de l'ordre de 125 µm de diamètre.

Les fibres optiques sont extrêmement fragiles, et la préparation des connexions est délicate en raison du risque élevé de rupture des fibres de verre de petit diamètre.

On connaît des systèmes de raccordement comportant un manchon ou un bloc de caoutchouc ou autre matière traversé par un fin passage rectiligne. On enfonce de chaque côté les extrémités à raccorder de deux fibres optiques, jusqu'à ce qu'elles soient en contact. Si le centrage est généralement correct, ce dispositif présente l'inconvénient de ne pas être séparable et le risque élevé de rupture de la fibre pendant l'opération.

On connaît également des systèmes du type connecteur, dans lesquels une fibre est maintenue au centre d'un connecteur par trois tiges cylindriques serrées élastiquement l'une contre l'autre, les trois tiges cylindriques maintenant élastiquement entre elles une fibre optique (brevet US-A-4 184 741). Mais ce brevet ne prévoit pas de moyens de centrage dans le plan de raccordement des fibres. A cet égard, on connaît aussi un connecteur dans lequel une fibre est centrée par des billes d'acier disposées dans un plan parallèle au plan de raccordement. En plaçant en regard l'un de l'autre deux connecteurs identiques, face contre face, les billes de l'un se placent entre les billes de l'autre et l'on obtient un centrage théoriquement correct, d'un connecteur par rapport à l'autre. Mais la pression de contact de l'extrémité d'une fibre contre l'extrémité de l'autre fibre est mal déterminée, et le centrage de la fibre au milieu des billes n'est pas assuré. Il est aussi connu (brevet US-A-4 094 580) pour centrer l'une par rapport à l'autre les deux parties d'un connecteur, et affermir l'assemblage, de prévoir sur chaque partie du connecteur des tiges saillantes, dont les bouts sont arrondis, pour engager les tiges d'une partie entre les tiges de l'autre. Ici encore, la pression de contact entre les extrémités de deux fibres à raccorder est difficile à déterminer.

La présente invention a pour objet un dispositif de centrage pour raccordement de fibres optiques qui permette un centrage exact (aux tolérances admissibles près, c'est-à-dire de l'ordre de quelques pour cent du diamètre), qui assure un blocage de jeux évitant toute variation mécanique, et une pression de contact suffisante et non excessive entre les extrémités en regard des fibres. Le dispositif selon l'invention permet d'effectuer l'alignement des axes parallèles et perpendiculaires des extrémités de chaque fibre et permet également la connexion et la déconnexion facile d'une fibre sur une autre fibre ou sur un élément de tableau quelconque et, par suite, la modification des connexions. L'invention vise également des moyens (outillage et procédé) pour réaliser la connexion, aussi bien sur un chantier mal équipé qu'en atelier.

Conformément à la présente invention, ce résultat est obtenu par une cellule de centrage pour raccordement bout à bout de fibres optiques, comportant au moins trois éléments cylindriques longitudinaux parallèles ou piges laissant entre eux un vide axial pour recevoir une fibre optique, ces piges étant enveloppées dans une gaine ou cartouche exerçant sur les piges une pression permanente, au moins une des piges étant en matière élastiquement déformable, une extrémité de chaque pige et l'extrémité de la fibre optique étant sensiblement dans le même plan, caractérisée en ce que ladite extrémité de chaque pige est convexe, arrondie, du côté du raccordement et en ce que ces extrémités définissent entre elles des formes concaves qui permettent à deux cellules face à face de se loger l'une dans l'autre de façon à provoquer la mise en œuvre de forces résultantes effectuant le centrage axial des fibres l'une par rapport à l'autre. Les désignations «pige», «cartouche» et «cellule» sont arbitraires et ont pur objet de simplifier l'explication en évitant d'employer des termes généraux. Il est bien entendu que l'emploi de ces termes ne limite nullement l'invention dont les moyens sont définis essentiellement par leurs structures telles que décrites et revendiquées ou par leurs fonctions.

Conformément à l'invention, on utilise pour assembler la cellule décrite ci-dessus un outil comportant un tube central, d'un diamètre adapté à recevoir une fibre de verre, on assemble la cartouche autour du tube, on procède à la mise en compression de la cartouche par engagement du corps de cellule autour des piges et de la cartouche, puis on engage une fibre optique dans le tube, que l'on retire progressivement une fois que la fibre a atteint sa position définitive.

Avantageusement le tube est solidaire d'un outil cylindrique destiné à recevoir la cartouche. L'outil avec le tube peut être éventuellement jeté après une opération d'assemblage sur un chantier.

L'outillage selon l'invention est remarquable notamment en ce qu'il comporte une douille, formée par un cylindre ouvert à une extrémité, et fermé, au moins partiellement à l'autre, le diamètre du cylindre étant prévu pour recevoir la cartouche en maintenant cette dernière serrée ou comprimée, un tube fin étant fixé dans l'axe de la douille et s'étendant à travers l'extrémité ouverte de celle-ci.

Selon une autre caractéristique dans un procédé de mise en œuvre de l'invention, on dispose les piges autour du tube, avec les extrémités arrondies engagées dans la douille, et l'on passe la cartouche autour des piges, en la glissant également dans la douille. L'ensemble ainsi formé peut être utilisé pour la mise en place d'une cellule de centrage sur l'extrémité d'une fibre de verre. On procède de la façon suivante: on engage une fibre de verre dans le tube de l'outillage garni comme ci-dessus, l'on dispose un corps de cellule autour de la cartouche et l'on extrait progressivement l'outillage en éloignant la douille, ce qui retire le tube; les piges se resserrent autour de la fibre au fur et à mesure du retrait du tube.

D'autres caractéristiques de l'invention apparaîtront au cours de la description qui va suivre, donnée à titre d'exemple non limitatif en regard des dessins ci-joints et qui fera bien comprendre comment l'invention peut être réalisée.

Les dessins représentent:

– fig. 1, une vue en élévation, avec partie en coupe d'une cellule établie conformément à la présente invention;
– fig. 2, une vue en bout d'une partie d'une cartouche formant une cellule de centrage selon l'invention, avec au centre une fibre optique ou un élément de tube selon un mode de réalisation;
– fig. 3, une vue en élévation de la cartouche de la figure 2;
– fig. 4, une vue analogue à la figure 2, pour un autre mode de réalisation, avant serrage de la cartouche;
– fig. 5, une vue correspondant à la figure 4, représentant l'état resserré de la cartouche, avec une fibre optique;
– fig. 6, une vue en coupe d'un exemple de corps de cellule;
– fig. 7, une vue en élévation partielle avec parties en coupe d'un ensemble connecté selon la présente invention;
– fig. 8, une vue en coupe partielle dans un plan axial d'un raccordement selon l'invention; et,
– fig. 9, une vue en coupe d'un outil de montage.

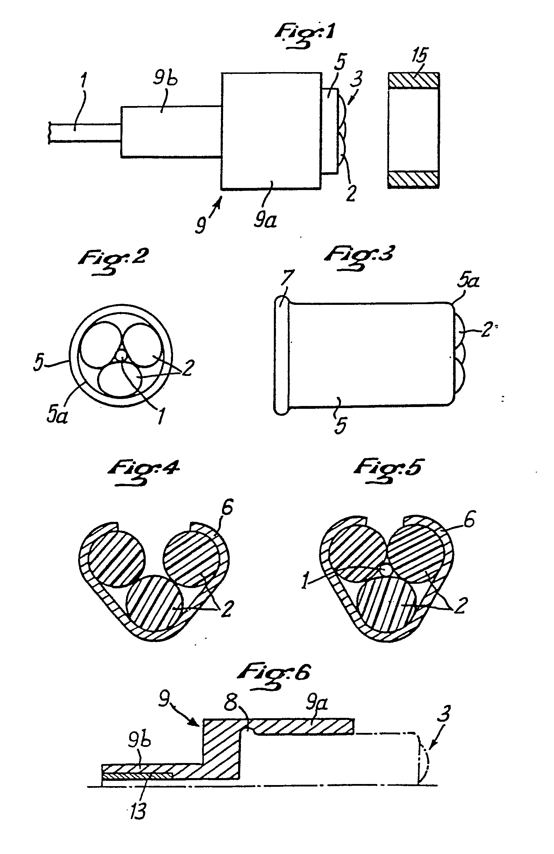

Sur les dessins, on a représenté une fibre optique 1 en verre, généralement enveloppée dans une gaine protectrice. La fibre qui peut avoir un diamètre de l'ordre de 125 microns (ou être beaucoup plus grosse) est maintenue dans la cellule de centrage par trois piges 2 (cales cylindriques de faible diamètre et de longueur relativement grande par rapport au diamètre). Selon l'invention, les piges exercent une pression élastique sur la fibre. Pour cela, les piges peuvent être en matière élastique, ou au moins l'une d'entre elles. Pour assurer le maintien correct de la fibre, il faut au moins trois piges; un nombre différent peut être choisi suivant le diamètre de la fibre, mais en général un nombre plus important ne paraît pas meilleur. Les piges s'étendent le long de la fibre jusqu'à son extrémité, les extrémités des piges et de la fibre étant sensiblement dans le même plan. Avantageusement les extrémités des piges sont bombées, convexes ou arrondies (comme indiqué par les flèches 3 sur la figure 1 et sur la figure 6). L'extrémité de la fibre est alors située dans un plan légèrement en recul par rapport au sommet des parties bombées. Ces formes convexes définissent entre elles des formes concaves qui permettent à deux cellules face à face de se loger l'une dans l'autre avec un décalage de 1/6 de tour, de façon à provoquer la mise en œuvre de forces résultantes effectuant le centrage des fibres l'une par rapport à l'autre.

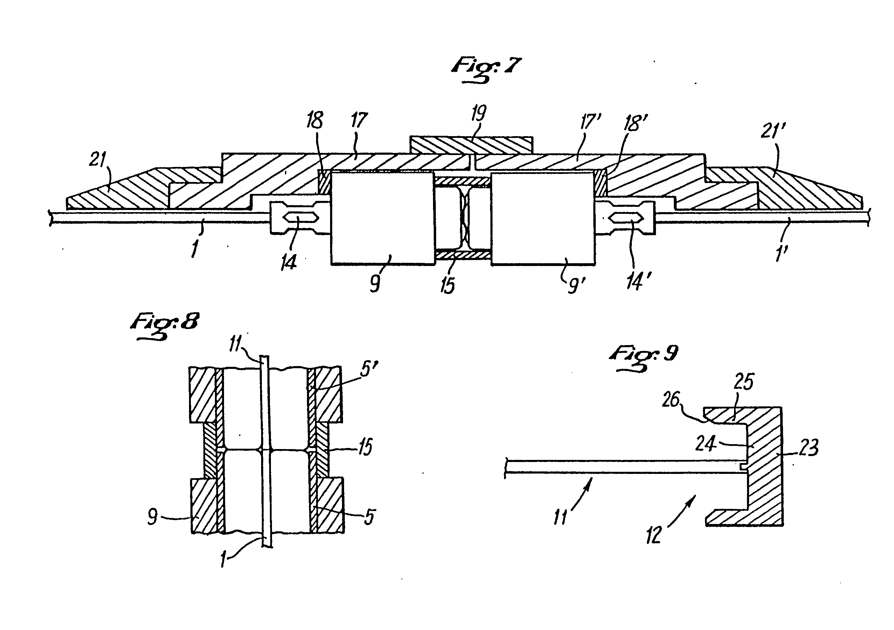

Les piges sont elles-mêmes maintenues par une cartouche 5 (figures 1, 2, 3 et 8) ou 6 (figures 4 et 5). La cartouche 5 est un simple cylindre, avec une déformation 5a pour le maintien des piges, et pouvant comporter un bourrelet 7 à l'extrémité opposée aux sommets (voir figure 3) permettant une fixation dans une rainure circulaire 8 du corps de cellule 9. Sur la figure 2, on a représenté une fibre optique 1 au centre, mais cela peut être aussi un tube destiné à recevoir une fibre optique, le tube étant monté à demeure dans la cartouche et s'étendant sur une partie de la longueur des piges. En variante, la cartouche 6 peut être un cylindre ouvert suivant une génératrice (figures 4 et 5), de section circulaire ou non, ce qui permet de faciliter le montage, compte tenu des très petites dimensions des éléments à assembler. La cartouche de forme ouverte est garnie de trois piges comme représenté sur la figure 4. La matière de l'enveloppe de la cartouche doit être d'une élasticité permanente afin d'assurer une pression constante sur la fibre optique. Elle peut être métallique ou plastique suivant les conditions ambiantes d'utilisation. Au centre, on vient placer la fibre optique 1, ou le tube 11 d'un outil 12, représenté sur la figure 9, ou un élément de tube restant à demeure, ensuite on resserre la cartouche pour l'amener dans la position de la figure 5.

Pour obtenir une cellule de centrage, on place un corps de cellule 9, dont un exemple est représenté en demi-coupe sur la figure 6, autour de la cartouche. Afin de pouvoir le placer, le corps de cellule a été engagé préalablement sur la fibre si celle-ci a une certaine longueur, pour éviter d'avoir à le glisser sur toute la longueur de celle-ci. Comme représenté sur la figure 6, le corps de cellule comporte une partie 9a de grand diamètre entourant la cartouche, avec une rainure périphérique 8 pour recevoir le talon 7 de celle-ci, et une partie 9b de petit diamètre, servant à recevoir et guider la fibre optique 1. Avantageusement, le corps de cellule est constitué en matière malléable, tel qu'un alliage de bronze, d'étain, d'aluminium ou analogue, et la partie mince 9b peut comporter une garniture interne 13 en caoutchouc, matière plastique ou analogue, ce qui permet d'effectuer un rétreint 14 par pincement (voir figure 7), pour maintenir la fibre serrée sans jeu.

En variante, la cartouche et le corps de cellule peuvent ne faire qu'une seule pièce.

Pour connecter deux extrémités de fibres optiques bout à bout, on peut, dans un mode de réalisation de la présente invention, mettre en regard deux cellules telles que celle représentée sur la figure 1 et on les serre l'une contre l'autre au moyen d'un connecteur approprié d'un type quelconque hermaphrodite ou non (figures 7 et 8) éventuellement avec interposition d'une virole 15 ou bague de centrage pour régler l'écartement. L'emploi de cette virole 15, et le cas échéant ses dimensions, dépendent des dimensions relatives du corps de cellule et de la cartouche.

Sur la figure 7 on a représenté un connecteur comportant deux parties 17, 17', maintenues ensemble par une bague 19 assurant l'accouplement. Des joints en caoutchouc 18, 19' peuvent être prévus. Les détails de jonction des demi-connecteurs ne sont pas représentés car il s'agit de dispositions classiques qui ne font pas partie de la présente invention. Les demi-connecteurs peuvent être prolongés par des manchons souples en caoutchouc 21, 21' afin de limiter le rayon de courbure des fibres. On a schématisé dans la coupe de la figure 8 l'écrasement des têtes arrondies des piges sous l'effet du serrage dans le cas bien entendu où toutes les piges sont en matière élastique. En pratique, on doit rechercher une souplesse de la matière des piges permettant après un serrage axial raisonnable un écrasement remplissant partiellement le volume, ce qui provoque des efforts convergents favorisant le centrage axial de la fibre.

On a représenté en coupe sur la figure 9 un outil 12 de montage d'une cellule selon l'invention. Cet outil comporte une douille 23 avec un fond 24 et une partie tubulaire 25, avantageusement chanfreinée en 26 pour faciliter l'introduction de la cartouche. Pour procéder au montage, on introduit par exemple le tube 11 au centre de la cartouche 6 garnie de trois piges, dans la position ouverte de la figure 4; puis on referme la cartouche (figure 5) et on l'engage dans la douille 25 de l'outil 12 en la faisant glisser sur le tube 11. La longueur du tube 11 est fonction de la longueur des piges. Un tube fixe peut être prévu lors de l'assemblage des piges. Lors du montage, l'extrémité du tube 11 viendra s'appliquer contre l'extrémité du tube fixe. La présence d'un tube fixe sur une partie de la longueur des piges facilite le déplacement de la fibre pour ajuster sa position longitudinal lors du raccordement contre une autre fibre. Ensuite, on engage le corps de cellule sur la cartouche.

Il est alors possible d'engager la fibre optique dans la cellule. Très souvent, l'ensemble ainsi monté: outil 12, trois piges 2 et cartouche 5 ou 6 avec ou sans le corps de cellule qui peut être mis en place au dernier moment, peut être emmené sur un chantier et mis en place facilement au moment de la réalisation de l'accouplement. Cet ensemble constitue donc un des produits objet de l'invention. Son emploi dispense d'opérations délicates sur le site.

Pour réaliser la mise en place de la fibre optique, on engage cette dernière dans le tube 11 ou le tube fixe qui la précède, jusqu'à ce qu'elle vienne en butée sur le fond du tube. Si le corps de cellule n'est pas mis en place, on le glisse sur la cartouche. On rend solidaire la fibre du corps de cellule, par exemple par déformation (pincement) en éloignant la douille 23. Au fur et à mesure que le tube découvre la fibre de verre, les piges se resserrent contre la fibre et la maintiennent en place. Quand le tube est extrait complètement, la cellule se trouve dans la situation de la figure 1 (ou 7).

Une cellule selon l'invention (ou selon les cas une paire de cellules) permet de réaliser une épissure, ou un ensemble connecteur démontable. Une telle cellule peut ainsi servi à connecter une arrivée sur une de plusieurs sorties, ou être incorporée dans un commutateur mobile dont elle forme une liaison.

Il va de soi que les modes de réalisation décrits ne sont que des exemples et qu'il serait possible de les modifier, notamment par substitution d'équivalents techniques, sans sortir pour cela du cadre de l'invention.

**Revendications**

1. Cellule de centrage pour raccordement bout à bout de fibres optiques, comportant au moins trois éléments cylindriques longitudinaux parallèles (2) ou piges, laissant entre eux un vide axial pour recevoir une fibre optique, ces piges étant enveloppées dans une gaine ou cartouche (5, 6) exerçant sur les piges une pression permanente, au moins une des piges étant en matière élastiquement déformable, une extrémité de chaque pige et l'extrémité de la fibre optique étant sensiblement dans le même plan, caractérisée en ce que ladite extrémité (3) de chaque pige est convexe arrondie, du côté du raccordement, et en ce que ces extrémités definissent entre elles des formes concaves qui permettent à deux cellules face à face de se loger l'une dans l'autre de façon à provoquer la mise en œuvre de forces résultantes effectuant le centrage axial des fibres l'une par rapport à l'autre.

2. Cellule selon la revendication 1, caractérisée en ce qu'elle comporte un tube central placé dans ledit vide axial prévu pour recevoir une fibre optique, et s'étendant sur une partie de la longueur des piges du côté opposé au raccordement.

3. Cellule selon une des revendications 1 ou 2, caractérisée en ce qu'elle comporte un corps de cellule (9) enveloppant la cartouche (5).

4. Cellule selon une des revendications 1 à 3, caractérisée en ce qu'elle comporte en outre un organe de montage (12), formé par une douille (23) enveloppant la cartouche à partir du côté du raccordement sur une partie de sa longueur, sur laquelle douille est fixé un tube axial (11), placé au centre de l'ensemble des piges, d'un diamètre permettant de recevoir en glissement une fibre optique.

5. Cellule selon une des revendications précédentes, caractérisée en ce que, du côté opposé au raccordement, le corps de cellule, le cas échéant la douille, comporte une partie déformable (9b) éventuellement avec une garniture interne souple (13) en vue de serrer une fibre optique.

6. Cellule selon une des revendications 1 à 3 et 5, caractérisée en ce qu'elle est enveloppée dans un demi-connecteur (17), comportant des moyens (19) pour coopérer avec un autre demi-connecteur (17') pour rendre solidaires entre eux les deux demi-connecteurs et exercer entre eux une force de raccordement axial.

7. Procédé de mise en place d'une cellule selon la revendication 4 sur une fibre optique, caractérisée en ce que la fibre est engagée dans le tube axial (11) de l'organe de montage (12) puis celui-ci est extrait avec le tube, en laissant les piges se resserrer sur la fibre optique.

## Patentansprüche

1. Zentrierfassung zum endweisen Verbinden von optischen Fasern, mit wenigstens drei langgestreckten, parallelen, zylindrischen Bauteilen (2) oder Passstäben, zwischen denen ein Axialraum zur Aufnahme einer optischen Faser freigelassen wird, wobei die Passstäbe von einer Hülle oder Hülse (5, 6) umgeben sind, die auf die Passstäbe einen ständigen Druck ausübt und wobei wenigstens einer der Passstäbe aus einem elastisch verformbaren Material besteht und ein Ende eines jeden Passstabes und das Ende der optischen Faser im wesentlichen in derselben Ebene liegen, dadurch gekennzeichnet, dass das Ende (3) eines jeden Passstabes auf der Verbindungsseite konvex abgerundet ist und dass diese Enden zwischen sich konkave Formen bilden, die es zwei sich gegenüberliegenden Fassungen ermöglichen, dass die eine in die andere derart eingesetzt wird, dass die auftretenden Kräfte eine axiale Zentrierung der Fasern zueinander bewirken.

2. Fassung nach Anspruch 1, dadurch gekennzeichnet, dass sie ein zentrales Rohr aufweist, das im axialen zur Aufnahme einer optischen Faser vorgesehenen Raum eingesetzt ist und sich entlang eines Längsabschnittes der Passstäbe auf der der Verbindung gegenüberliegenden Seite erstreckt.

3. Fassung nach einem der Ansprüche 1 oder 2, dadurch gekennzeichnet, dass sie einen Fassungskörper (9) aufweist, der die Hülle (5) umgibt.

4. Fassung nach einem der Ansprüche 1 bis 3, dadurch gekennzeichnet, dass sie zusätzlich ein Montageteil (12) aufweist, das aus einer Tülle (23) besteht, die die Hülse umgibt, ausgehend von der Verbindungsseite entlang eines Längsabschnitts, wobei auf der Tülle ein Axialrohr (11) befestigt ist, das im Zentrum der Passstabanordnung angeordnet ist und dessen Durchmesser die gleitende Aufnahme einer optischen Faser ermöglicht.

5. Fassung nach einem der vorhergehenden Ansprüche, dadurch gekennzeichnet, dass auf der der Verbindung gegenüberliegenden Seite der Fassungskörper und gegebenenfalls die Tülle einen verformbaren Abschnitt (9b) aufweist, gegebenenfalls mit einer inneren weichen Auskleidung (13) zum Einklemmen einer optischen Faser.

6. Fassung nach einem der Ansprüche 1 bis 3 und 5, dadurch gekennzeichnet, dass sie von einer Verbinderhälfte (17) umgeben ist, die eine Anordnung (19) aufweist zum Zusammenwirken mit einer anderen Verbinderhälfte (17') derart, dass diese beiden Verbinderhälften fest miteinander verbunden werden und zwischen ihnen eine axiale Verbindungskraft auftritt.

7. Verfahren zum Aufsetzen einer Fassung nach Anspruch 4 auf eine optische Faser, dadurch gekennzeichnet, dass die Faser in das Axialrohr (11) des Montageteils (12) eingesetzt wird und danach dieses mit dem Rohr entfernt wird, wodurch sich die Passstäbe an die optische Faser pressen.

## Claims

1. Centering cell for end-to-end connection of optical fibres, comprising at least three parallel longitudinal cylindrical elements (2) or gauging members, leaving between them an axial gap for reception of an optical fibre, these gauging members being sheathed in a sleeve or cartridge (5, 6) exerting a constant pressure on the gauging members, at least one of the gauging members being of elastically deformable material, one extremity of each gauging member and the extremity of the optical fibre being substantially in the same plane, characterised in that the said extremity (3) of each gauging member is convexly rounded at the joint side, and in that these extremities between them define concave forms which allow two confronting cells to be engaged one in the other in such manner as to cause the application of resultant forces performing the axial centering of the fibres with respect to each other.

2. Cell according to claim 1, characterised in that it comprises a central tube situated in the said axial gap arranged to receive an optical fibre and extending over a part of the length of the gauging members at the other side form the joint.

3. Cell according to one of the claims 1 or 2, characterised in that it comprises a cell element (9) surrounding the cartridge (5).

4. Cell according to one of the claims 1 to 3, characterised in that it also comprises a mounting element (12) formed by a bushing (23) surrounding the cartridge over a part of its length from the joint side, on which bushing is secured an axial tube (11) situated at the centre of the assembly of gauging members, of a diameter allowing the reception of an optical fibre in a sliding fit.

5. Cell according to one of the preceding claims, characterised in that, on the other side from the joint, the cell element, being the bushing if applicable, comprises a deformable portion (9b) possibly with a pliable internal lining (13) intended to grip an optical fibre.

6. Cell according to one of the claims 1 to 3 and 5, characterised in that it is enflanked in a semi-connector (17) comprising means (19) for co-operating with another semi-connector (17') for interlocking the two semi-connectors and exercising an axial coupling force between them.

7. Method of placing a cell according to claim 4 in position on an optical fibre, characterised in that the fibre is engaged in the axial tube (11) of the mounting element (12) whereupon the latter is withdrawn with the tube whilst allowing the gauging members to contract on to the optical fibre.

Fig:1

Fig:2  Fig:3

Fig:4  Fig:5

Fig:6

Fig. 7

Fig. 8

Fig. 9